# FASCICULE DE BREVET EUROPEEN

(11) **EP 3 256 792 B1**
(45) Date de publication et mention de la délivrance du brevet: **15.04.2020**
(21) Numéro de dépôt: 16705073.1
(22) Date de dépôt: 09.02.2016
(51) Int. Cl.: F24H 3/04, B60H 1/22, H05B 3/06

(54) **BOÎTIER D'UN DISPOSITIF DE CHAUFFAGE ELECTRIQUE**
GEHÄUSE FÜR EINE ELEKTRISCHE SCHALTVORRICHTUNG
HOUSING FOR AN ELECTRIC HEATING DEVICE

(30) Priorité: 10.02.2015 FR 1551036
(43) Date de publication de la demande: 20.12.2017
(73) Titulaire: Valeo Systemes Thermiques, 78320 Le Mesnil Saint Denis (FR)
(72) Inventeur: KERG, Philippe, 78320 Le Mesnil Saint Denis (FR); KARAASLAN, Serif, 78320 Le Mesnil Saint Denis (FR); PIERRON, Frédéric, 78320 Le Mesnil Saint Denis (FR)
(74) Mandataire: Tran, Chi-Hai
(86) Numéro de dépôt international: PCT/EP2016/052720
(87) Numéro de publication internationale: WO 2016/128395

(56) Documents cités:
- EP-A1- 1 821 575
- EP-A1- 2 133 225
- DE-A1-102012 011 903
- DE-U1-202006 017 352

## Description

L'invention relève du domaine de la ventilation, du chauffage et/ou de la climatisation de véhicule automobile. Elle concerne les dispositifs de chauffage additionnel destinés à être montés dans une installation de ventilation, de chauffage et/ou de climatisation d'un véhicule automobile.

Plus particulièrement, l'invention concerne un dispositif de chauffage additionnel comportant des éléments chauffants à résistances électriques, par exemple des résistances à coefficient de température positif (CTP), qui permettent de produire rapidement de la chaleur dans les véhicules, notamment lorsque l'on souhaite chauffer rapidement l'habitacle.

Des dispositifs de chauffage de ce type comportent un corps de chauffe comprenant des éléments d'échange thermique pouvant diffuser de la chaleur, associés auxdits éléments chauffants. Ces dispositifs de chauffage additionnel comportent également des moyens de connexion qui permettent le raccordement électrique des résistances à un réseau électrique source embarqué sur le véhicule, pour l'alimentation électrique des éléments chauffants, et des moyens de connexion qui permettent la fixation mécanique du dispositif de chauffage additionnel à l'installation de ventilation, de chauffage et/ou de climatisation.

Un boîtier pour un dispositif de chauffage électrique selon le préambule de la revendication 1 est connu, par exemple, de EP 1 821 575 A1. Dans ce contexte, l'invention vise à proposer une alternative aux réalisations connues de dispositifs de chauffage additionnel, qui soit au moins aussi efficace, pour un coût moindre et un montage simplifié.

L'invention propose à cet effet un boîtier pour un dispositif de chauffage électrique d'un flux d'air circulant à l'intérieur d'une installation de ventilation, chauffage et/ou climatisation d'un véhicule automobile, ledit boîtier comportant au moins un compartiment de chauffe définissant au moins un logement principal dans lequel peut être installé au moins un module chauffant, une première interface de connexion qui permet la liaison du au moins un module chauffant à une alimentation électrique du véhicule, une deuxième interface de connexion qui est apte à coopérer avec des moyens de maintien en position qui sont portés par l'installation de ventilation, chauffage et/ou climatisation, le compartiment de chauffe et les deux interfaces de connexion étant venus de matière de sorte que le boîtier est formé d'un seul et même bloc.

L'ensemble des modules chauffants définit le corps de chauffe du dispositif de chauffage électrique selon l'invention. Le corps de chauffe comprend ainsi au moins un module chauffant.

On considère que le compartiment de chauffe destiné à recevoir le bloc de chauffe et les deux interfaces de connexion sont monoblocs dès lors que leur séparation entraîne une destruction dudit compartiment de chauffe ou de l'une et/ou l'autre des interfaces. On comprend ici que le compartiment de chauffe et les deux interfaces sont issus d'une seule et même opération de moulage. La réalisation du boîtier en une seule et unique pièce optimise la rapidité et la précision des opérations de montage et réduit les risques d'un possible mauvais positionnement du compartiment de chauffe dans le conduit dans lequel il est disposé du fait de l'addition des jeux de fabrication et de montage. Par ailleurs, on diminue le nombre d'actions que doit réaliser un ou plusieurs opérateurs dans l'art antérieur où les interfaces de connexion doivent être rapportées sur le compartiment de chauffe.

Le boîtier du dispositif de chauffage électrique d'un flux d'air selon l'invention peut comporter en outre une ou plusieurs des caractéristiques suivantes, seules ou en combinaison :
- le au moins un module chauffant s'étend, lorsqu'il est disposé dans le compartiment de chauffe, selon une direction d'extension générale entre une première extrémité et une deuxième extrémité ;
- la direction d'extension générale dudit au moins un module chauffant est sensiblement longitudinale ;
- le compartiment de chauffe s'étend selon une direction d'extension générale entre une première et une deuxième extrémité ;
- la direction d'extension générale du compartiment de chauffe est sensiblement longitudinale ;
- le compartiment de chauffe destiné à recevoir le bloc de chauffe présente sensiblement la forme d'un parallélépipède ;
- au moins une partie d'au moins un côté du compartiment de chauffe est évidée ou ajourée ;
- le compartiment de chauffe comporte deux côtés latéraux parallèles s'étendant selon la direction d'extension générale du compartiment de chauffe et deux côtés principaux parallèles s'étendant selon la direction d'extension générale du compartiment de chauffe ;
- ces deux côtés latéraux sont matérialisés par des parois ;
- les deux côtés latéraux du compartiment de chauffe sont sensiblement en regard l'un de l'autre ;
- les deux côtés principaux du compartiment de chauffe sont sensiblement en regard l'un de l'autre ;
- les côtés latéraux s'étendent sensiblement perpendiculairement aux côtés principaux ;
- chacun des côtés principaux comporte au moins un montant transversal reliant lesdits côtés latéraux ;
- chacune des côtés principaux comporte au moins deux montants transversaux distants les uns des autres et préférentiellement parallèles ;
- chacune des extrémités d'un montant transversal est reliée à un côté latéral du compartiment de chauffe ;
- les interfaces de connexion sont disposées respectivement à des extrémités opposées du compartiment de chauffe, ces extrémités opposées étant préférentiellement ladite première et ladite deuxième extrémité entre lesquelles s'étend ledit compartiment de chauffe selon la direction d'extension générale ;
- les modules chauffants comportent au moins un élément apte à produire de la chaleur et au moins un élément associé apte à échanger de la chaleur avec le flux d'air traversant le bloc de chauffe ;
- ledit au moins un élément apte à produire de la chaleur est un élément résistif ;
- ledit au moins un élément apte à produire de la chaleur est un élément résistif de type à coefficient de température positif (CTP) ;
- ledit au moins un élément apte à produire de la chaleur est un élément résistif de type à coefficient de température positif (CTP) disposé dans ou sur un support tel qu'un barreau ;
- ledit au moins un élément apte à produire de la chaleur est un élément résistif disposé entre deux électrodes ;
- ledit au moins un élément associé qui est apte à échanger de la chaleur est un élément radiant ;
- ledit au moins un élément associé apte à échanger de la chaleur est au moins une ailette traversée par au moins un élément apte à produire de la chaleur, ou encore des intercalaires tels que des rubans métalliques plissés ou ondulés disposés entre des éléments aptes à produire de la chaleur ;
- ledit au moins un élément apte à produire de la chaleur est disposé entre deux éléments aptes à échanger de la chaleur ;
- le au moins un module chauffant comporte un élément apte à produire de la chaleur disposé entre deux éléments aptes à échanger de la chaleur ;
- le au moins un module chauffant comporte deux éléments aptes à produire de la chaleur et trois éléments aptes à échanger de la chaleur, un élément apte à échanger de la chaleur étant disposé entre deux éléments aptes à produire de la chaleur, chacun de ces éléments aptes à produire de la chaleur étant disposé entre l'élément central apte à échanger de la chaleur et un élément externe apte à échanger de la chaleur.

Selon l'invention, la deuxième interface de connexion comporte une ouverture pour l'insertion du au moins un module chauffant dans le logement du compartiment de chauffe, par le côté opposé à la première interface de connexion. La deuxième interface de connexion, comporte ainsi une paroi ouverte donnant accès au logement défini à l'intérieur du compartiment de chauffe. Préférentiellement, l'ouverture de cette paroi présente une hauteur et une largeur au moins sensiblement égales à la hauteur et à la largeur correspondantes du au moins un logement formé dans le compartiment de chauffe. La hauteur et la largeur sont définies dans des directions perpendiculaires à la direction d'extension générale du compartiment de chauffe.

Ainsi, l'insertion des modules chauffants peut être effectuée par le côté opposé à la première interface de connexion, ce qui permet avantageusement :
- d'insérer les modules chauffants dans le compartiment de chauffe alors que l'interface de connexion électrique est fixe par rapport au compartiment de chauffe ;
- de réduire la chaîne de côtes relative aux positions de ces éléments les uns par rapport aux autres ;
- de limiter le risque que les modules chauffants ne puissent être correctement insérés dans le compartiment de chauffe.

Selon une caractéristique possible, au moins un côté latéral du compartiment de chauffe peut comporter au moins un doigt d'encliquetage à déformation élastique permettant la retenue d'un module chauffant respectif. Ce doigt d'encliquetage est disposé préférentiellement à proximité de la deuxième interface de connexion.

Ainsi, après insertion d'un module chauffant dans le logement du compartiment de chauffe, une partie de ce module chauffant, préférentiellement son extrémité la plus proche de la deuxième interface de connexion, coopère avec le doigt d'encliquetage afin d'assurer un blocage en translation selon la direction d'extension générale dudit module chauffant. On évite ainsi avantageusement des modes de réalisation de l'art antérieur où une force est exercée sur les modules chauffants en direction de la première interface de connexion électrique, par des ressorts en appui contre la deuxième interface. Le corps de chauffe du boîtier du chauffage électrique selon l'invention est ainsi avantageusement plus compact puisque il n'est plus nécessaire de prévoir une place nécessaire pour ces ressorts.

Selon une caractéristique possible, le boîtier d'un dispositif de chauffage électrique selon l'invention comporte au moins un moyen permettant de créer une perte de charge du flux d'air circulant dans l'emplacement dans lequel ledit boîtier est installé.

La création de cette perte de charge permet avantageusement d'accentuer l'échange de chaleur entre le dispositif de chauffage électrique et ledit flux d'air.

Ce moyen permettant de créer une perte de charge peut présenter, notamment mais non exclusivement, la forme d'une lame, d'une barrette, d'un profilé, d'une plaque.

Le boîtier du dispositif de chauffage électrique d'un flux d'air selon l'invention peut comporter en outre une ou plusieurs des caractéristiques suivantes, seules ou en combinaison, en relation avec ledit moyen permettant de créer une perte de charge :
- ledit au moins un moyen permettant de créer une perte de charge est venue de matière avec le compartiment de chauffe ;
- ledit au moins un moyen permettant de créer une perte de charge s'étend selon une direction d'extension générale entre une première extrémité et une deuxième extrémité,
- la direction d'extension générale dudit au moins un moyen permettant de créer une perte de charge est sensiblement longitudinale ;
- ledit au moins un moyen permettant de créer une perte de charge s'étend au contact d'un côté latéral du compartiment de chauffe ;
- ledit au moins un moyen permettant de créer une perte de charge s'étend sur toute la longueur d'un côté latéral du compartiment de chauffe, d'une interface de connexion à l'autre ;
- ledit au moins un moyen permettant de créer une perte de charge comporte au moins un orifice ou une rainure ;
- ledit au moins un moyen permettant de créer une perte de charge comporte au moins un orifice ou une rainure disposé transversalement ou perpendiculairement par rapport à la direction d'extension générale du moyen permettant de créer une perte de charge ;
- ledit au moins un moyen permettant de créer une perte de charge comporte au moins deux orifices ou deux rainures disposés à intervalles réguliers.

Selon une caractéristique possible, le compartiment de chauffe comprend au moins une paroi intermédiaire s'étendant à l'intérieur du logement dans lequel peut être installé au moins un module chauffant.

Le boîtier du dispositif de chauffage électrique d'un flux d'air selon l'invention peut comporter en outre une ou plusieurs des caractéristiques suivantes, seules ou en combinaison, en relation avec ladite paroi intermédiaire :
- ladite au moins une paroi intermédiaire est disposée sensiblement parallèlement auxdits côtés latéraux du compartiment de chauffe, et entre ces côtés latéraux qui s'étendent dans la direction d'extension générale du compartiment de chauffe;
- ladite au moins une paroi intermédiaire s'étend selon une direction d'extension générale entre une première extrémité et une deuxième extrémité ;
- ladite au moins une paroi intermédiaire est sensiblement longitudinale ;
- ladite au moins une paroi intermédiaire s'étend sur toute la longueur du compartiment de chauffe, d'une interface de connexion à l'autre ;
- ladite au moins une paroi intermédiaire comporte au moins un orifice ;
- ladite au moins une paroi intermédiaire est poinçonnée ;
- au moins une partie de ladite au moins une paroi intermédiaire présente les propriétés d'une lame de rappel élastique ;
- ladite au moins une paroi intermédiaire permet de subdiviser le logement principal du compartiment de chauffe en deux sous-parties permettant chacune de recevoir au moins un module chauffant ; une première sous-partie, ou premier logement, est délimitée par une face interne d'un côté latéral du compartiment de chauffe et la paroi intermédiaire et une deuxième sous-partie, ou deuxième logement, est délimitée par une face interne du côté latéral opposé et la paroi intermédiaire ;
- la paroi intermédiaire est décentrée afin d'être plus proche de l'un desdits côtés latéraux du compartiment de chauffe, le moyen permettant de créer une perte de charge est venu de matière avec ce côté latéral ;
- la paroi intermédiaire comporte au moins un doigt d'encliquetage ;
- le premier logement est dimensionné pour recevoir un module chauffant comportant un élément apte à produire de la chaleur disposé entre deux éléments aptes à échanger de la chaleur ;
- le deuxième logement est dimensionné pour recevoir un module chauffant comportant deux éléments aptes à produire de la chaleur et trois éléments aptes à échanger de la chaleur.

Selon une caractéristique possible, la première interface de connexion comporte :
- une première platine, préférentiellement sensiblement plane, et préférentiellement perpendiculaire à la direction d'extension générale du compartiment de chauffe ; et
- un fourreau qui s'étend en saillie depuis la première platine, du côté opposé à celui où s'étend le compartiment de chauffe.

Le boîtier du dispositif de chauffage électrique d'un flux d'air selon l'invention peut comporter en outre une ou plusieurs des caractéristiques suivantes, seules ou en combinaison :
- chacun desdits terminaux de raccordement électrique est disposé à l'intérieur de ce fourreau ;
- chacun desdits terminaux de raccordement électrique est rapporté sur une électrode s'étendant en saillie d'un module chauffant ;
- chaque terminal traverse la première platine de la première interface de connexion par une fente débouchant de chaque côté de cette première platine.

Selon une caractéristique possible, le boîtier du dispositif de chauffage électrique est réalisé dans un matériau plastique chargé, en fibres de verre notamment.

L'invention concerne également un dispositif de chauffage comportant un boîtier tel que décrit précédemment et au moins un module chauffant logé dans le compartiment de chauffe du boîtier.

L'invention concerne également une installation de ventilation, chauffage et/ou climatisation d'un véhicule automobile comportant un tel dispositif de chauffage.

D'autres caractéristiques et avantages de la présente invention apparaitront plus clairement à l'aide de la description et des dessins parmi lesquels :
- la figure 1 illustre, de côté, un dispositif de chauffage additionnel apte à être logé dans un conduit de circulation d'air d'une installation de ventilation, chauffage et/ou climatisation, les modules chauffants n'étant pas illustrés ;
- la figure 2 est une vue en perspective, de trois quart arrière, du dispositif de chauffage de la figure 1 ;
- les figures 3 et 4 sont des vues semblables à celles respectivement des figures 1 et 2, dans lesquels on a représenté des modules chauffants assemblés dans le compartiment de chauffe du dispositif de chauffage additionnel;
- la figure 5 est une représentation schématique, selon la même perspective que celle de la figure 4, de deux modules chauffants seuls, à une extrémité desquels sont disposés des terminaux de raccordement électrique ;
- et la figure 6 est une vue de détail de la figure 5, dans laquelle on a représenté un terminal de raccordement électrique dans une vue éclatée pour faire apparaître une languette d'électrode solidaire d'un module chauffant apte à supporter ledit terminal.

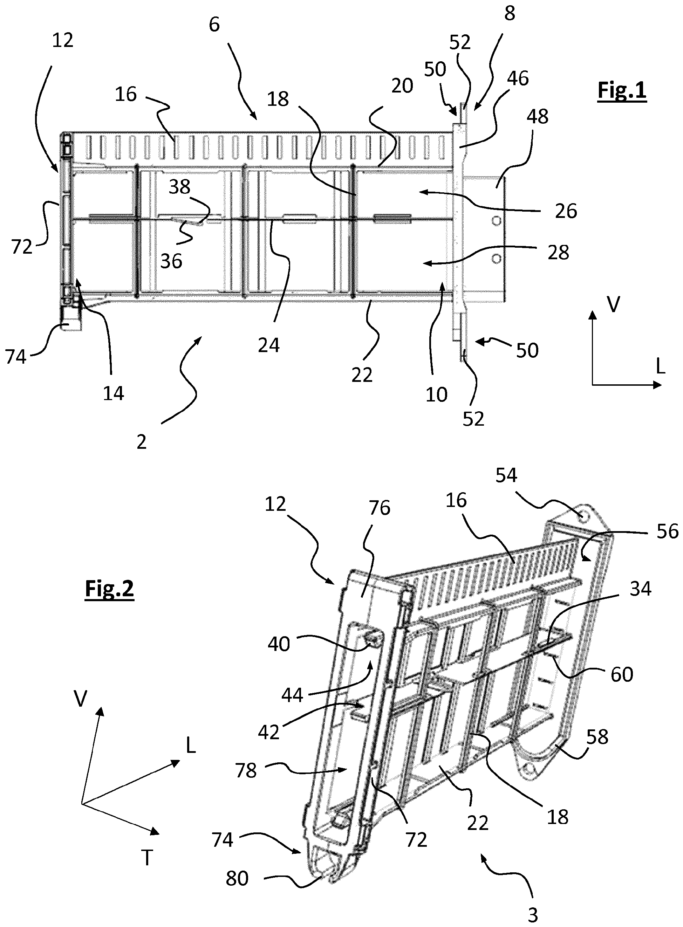

Dans la description qui va suivre, on se réfèrera à une orientation fonction des axes Longitudinaux, Verticaux et Transversaux tels qu'ils sont définis arbitrairement par le trièdre L,V,T représenté sur les figures 1 et 2. Le choix des appellations de ces axes n'est pas limitatif de l'orientation que peut prendre le dispositif dans son application à un véhicule automobile, et l'utilisation de termes tels que « supérieur » et « inférieur » est choisie en fonction de l'orientation dans l'illustration accompagnant cette description sans qu'elle soit non plus limitative.

On se réfère aux figures 1 à 4 pour décrire le dispositif de chauffage additionnel selon l'invention, qui est apte à être logé dans un conduit de circulation d'air d'une installation de ventilation, chauffage et/ou climatisation, de manière à transformer l'énergie électrique prélevée sur le véhicule en énergie thermique restituée dans l'air traversant ladite installation de ventilation, chauffage et/ou climatisation.

L'installation n'est pas ici représentée, mais on comprendra qu'un conduit principal de cette installation comporte de façon classique une ouverture réalisée dans la paroi pour l'insertion du dispositif de chauffage additionnel.

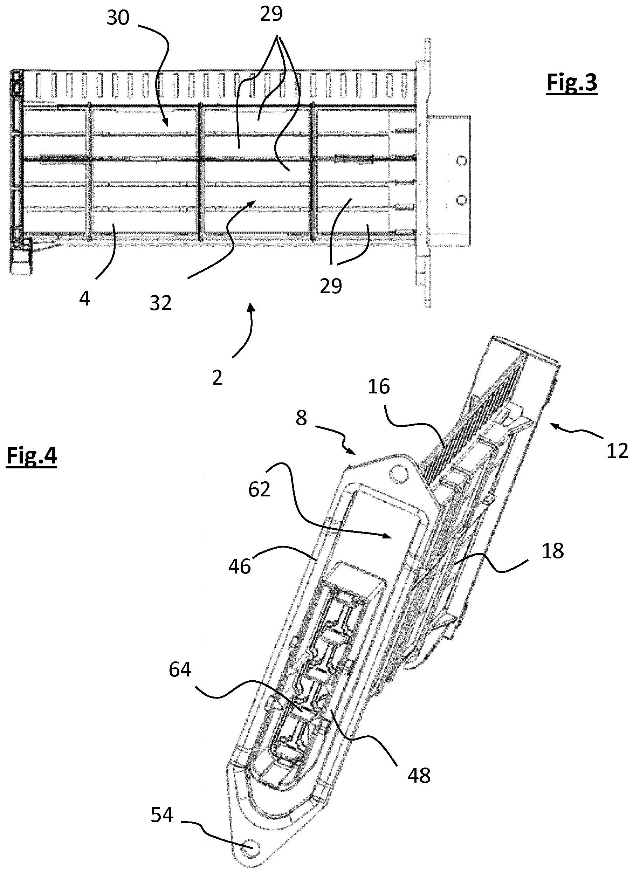

Le dispositif de chauffage additionnel 2 selon l'invention comporte un boîtier 3 et au moins un module chauffant 4 (visible sur les figures 3 et 4) apte à transformer un courant électrique en énergie thermique. On pourra se référer au document brevet FR2895204 pour la description plus détaillée des modules chauffants et un exemple de réalisation avec la présence de dissipateurs thermiques enserrés par des électrodes de part et d'autre d'une ou plusieurs pierres à coefficient de température positif (effet CTP).

Selon l'invention, le boîtier 3 est formé par un compartiment de chauffe 6 dans lequel des modules chauffants 4 peuvent être insérés, une première interface de connexion 8 disposée à une extrémité 10 du compartiment de chauffe 6 pour le raccordement du dispositif 2 à un réseau électrique du véhicule et l'alimentation des modules chauffants 4, une deuxième interface 12, notamment de fixation mécanique, qui est disposée à l'autre extrémité 14 du compartiment de chauffe 6 opposée à l'extrémité 10 portant la première interface de connexion 8 et qui est apte à coopérer avec une paroi du conduit de l'installation de ventilation, chauffage et/ou climatisation, ainsi qu'une barrette 16 qui s'étend le long du compartiment de chauffe 4 entre les deux interfaces de connexion 8, 12, cette barrette 16 étant un moyen permettant de créer une perte de charge. Le boîtier 3 est réalisé en un matériau plastique, par exemple du polypropylène ou du polyamide, chargé en fibres de verre.

Le compartiment de chauffe 6 présente une forme de parallélépipède rectangle dont les deux faces principales sont ajourées pour permettre la diffusion dans le conduit de la chaleur dégagée par les modules chauffants 4 logés à l'intérieur du compartiment de chauffe 6. Des montants 18, disposés à intervalles, réguliers ou non, les uns des autres, s'étendent verticalement sur toute la hauteur de ces faces principales afin de rigidifier l'ensemble sans pénaliser le dégagement de chaleur.

Le compartiment de chauffe 6 comporte outre ces montants 18, trois parois longitudinales, parallèles entre elles et parmi lesquelles on distingue deux parois latérales 20, 22 et une paroi intermédiaire 24 disposée entre ces parois latérales 20, 22 qui définissent les côtés latéraux longitudinaux du compartiment de chauffe 6. Les montants 18 s'étendent sensiblement perpendiculairement à ces deux parois latérales 20, 22 depuis un bord transversal respectif pour relier les parois latérales 20, 22 entre elles.

On peut distinguer une paroi latérale dite supérieure 20 et une paroi latérale dite inférieure 22, la paroi latérale dite supérieure étant la paroi latérale porteuse de la barrette 16, et la paroi intermédiaire 24 est décentrée dans la direction verticale de sorte qu'elle est plus proche de la paroi latérale dite supérieure 20. On définit ainsi deux logements distincts dans le compartiment de chauffe 6. Un premier logement 26 est défini par la paroi latérale dite supérieure 20, les montants 18 et la paroi intermédiaire 24, tandis qu'un deuxième logement 28 est défini par la paroi latérale dite inférieure 22, les montants 8 et la paroi intermédiaire 24.

Il en résulte que, tel que cela est visible sur les figures, le premier logement 26 présente une hauteur, dans la direction transversale, plus petite que celle du deuxième logement 28. Le premier logement 26 est dimensionné pour recevoir un premier module chauffant 30 comportant deux moyens aptes à échanger de la chaleur tels que des dissipateurs thermiques 29, tandis que le deuxième logement est dimensionné pour recevoir un deuxième module chauffant 32 comportant trois moyens aptes à échanger de la chaleur tels que des dissipateurs thermiques 29.

Les dissipateurs thermiques 29 sont ainsi rapportés dans le compartiment de chauffe 6, les uns empilés sur les autres, avec des moyens aptes à produire de la chaleur tels que des pierres à effet CTP intercalés, de manière à former un assemblage de modules chauffants 30, 32 dans lequel l'un des modules chauffants comporte un dissipateur thermique de moins que le deuxième module chauffant. Ici un premier module chauffant 30 comporte deux dissipateurs thermiques 29 tandis qu'un deuxième module chauffant 32 en comporte trois.

La paroi intermédiaire 24 comporte des rebords de guidage 34 qui s'étendent en saillie verticale, partiellement le long de la paroi intermédiaire 24, de chaque côté transversal de celle-ci, pour faciliter le guidage en translation des modules chauffants 4 dans les logements 26, 28 définis dans le compartiment de chauffe 6, lors de l'insertion par coulissement de ceux-ci. On comprend que les parois latérales 20, 22 comportent avantageusement des rebords de guidage équivalents.

La paroi intermédiaire 24 comporte en outre une lame à déformation élastique 36, réalisée notamment par un poinçonnage partiel d'une portion de la paroi 24, de sorte qu'elle est articulée à la paroi intermédiaire 24 à une première extrémité longitudinale et qu'elle présente à l'opposé une extrémité libre qui s'étend, dans la position de repos de la lame 36, en saillie du plan défini par la paroi intermédiaire 24, dans le deuxième logement 28. La lame 36 est conformée de sorte que cette extrémité libre est rappelée par ressort dans cette position en saillie dans le deuxième logement 28. Par ailleurs, il est visible sur la figure 1 que l'extrémité libre comporte un bossage 38 en saillie du plan de la lame 36 dans le sens du rapprochement du plan de la paroi intermédiaire 24, de sorte que lorsque la lame 36 est contrainte pour se retrouver dans le plan défini par la paroi intermédiaire 24, le bossage 38 est situé dans le premier logement 26.

On comprend que les parois latérales 20 et 22 peuvent comporter une lame à déformation élastique qui s'étend dans l'un ou l'autre des logements 26, 28 pour réaliser la même fonction de maintien des modules chauffants 4 dans le logement.

Par ailleurs, des doigts d'encliquetage 40, à déformation élastique, sont réalisés aux extrémités distales 42, c'est-à-dire les extrémités tournées vers la deuxième interface de connexion 12, des parois latérales 20, 22 et de la paroi intermédiaire 24. Chaque doigt d'encliquetage 40 est réalisé de manière à s'étendre en saillie verticale de la paroi qu'il prolonge, les doigts 40 portés par les parois latérales 20 et 22 s'étendant en saillie vers la paroi intermédiaire 24 tandis que cette paroi intermédiaire 24 présente un doigt d'encliquetage s'étendant verticalement aussi bien vers la paroi latérale supérieure 20 que vers la paroi latérale inférieure 22. Le doigt d'encliquetage 40 présente une face externe 44, tournée vers la deuxième interface de connexion 12, qui est inclinée par rapport à la verticale et une face interne, tournée vers l'intérieur du compartiment de chauffe 6, qui est sensiblement droite pour former une butée de dégagement pour les modules chauffants 4 lorsqu'ils sont insérés dans le compartiment de chauffe 6 du dispositif 2. On comprend que de telles formes des doigts 40 facilitent l'écartement des doigts 40 lors du passage des modules chauffants 4 vers l'intérieur du compartiment de chauffe 6 et qu'elles bloquent ces modules chauffants 4 à l'intérieur de celui-ci lorsqu'ils sont en position.

Tel que cela été décrit ci-dessus, le compartiment de chauffe 6 est venu de matière avec la première interface de connexion 8, qui présente une double fonction, à savoir une fonction de connexion électrique pour permettre le raccordement des modules chauffants 4 à une source d'énergie électrique et une fonction mécanique pour fermer de façon étanche l'ouverture du conduit de l'installation de ventilation, chauffage et/ou climatisation par laquelle le dispositif de chauffage 2 est inséré.

La première interface de connexion 8 comporte une première platine 46 sensiblement plane, qui s'étend perpendiculairement aux parois 20, 22, 24 du compartiment de chauffe 6, et un fourreau 48 qui s'étend longitudinalement en saillie de la première platine 46, à l'opposé du compartiment de chauffe 6.

Les moyens de fixation mécanique associés à la première interface de connexion 8 sont portés par la première platine 46 qui présente à ses extrémités verticales 50 des pattes de fixation 52 dans lesquelles des trous de fixation 54 permettent la coopération de moyens de vissage avec des moyens taraudés, ici non représentés, solidaires du conduit de l'installation de ventilation, chauffage et/ou climatisation, pour la fixation mécanique du dispositif de chauffage additionnel 2 par rapport au conduit. Par ailleurs, la première platine 46 comporte sur sa face interne 56, tournée vers le compartiment de chauffe 6, une rainure périphérique 58 (visible sur la figure 2) dans laquelle un joint peut être positionné de sorte à assurer l'étanchéité à l'air entre l'intérieur de l'emplacement où s'étend le compartiment de chauffe 6 du dispositif 2 et l'extérieur de cet emplacement où s'étend la première platine 46 et notamment le fourreau 48.

La première interface 8 présente des fentes 60 qui s'étendent de la face interne 56 de la première platine 46, tournée vers le compartiment de chauffe 6, à la face externe 62 portant le fourreau 48. Les fentes 60 débouchent à l'intérieur du fourreau 48, dont les dimensions sont aptes à permettre la réception dans ce fourreau 48 de moyens de raccordement électrique directement reliés au réseau du véhicule. Ces moyens de raccordement coopèrent avec des terminaux de raccordement électriques 64 rendus solidaires d'électrodes 66 des modules chauffants 4. Les fentes 60 s'étendent longitudinalement et elles présentent une section définie pour recevoir et guider à travers la première interface 8 ces terminaux de raccordement électriques 64, afin qu'ils puissent d'une part être solidaires des électrodes 66 à l'intérieur du compartiment de chauffe 6 et qu'ils puissent d'autre part s'étendre dans le fourreau 48 en saillie de la face externe 62 de la première platine 46.

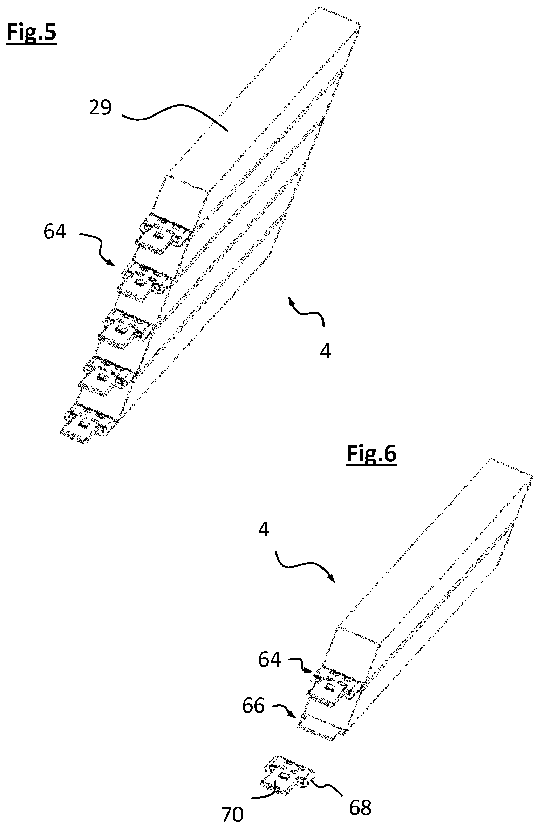

Dans le mode de réalisation illustré, tel que cela est visible sur les figures 4 à 6, un terminal électrique 64 de raccordement au faisceau électrique du véhicule est disposé sur l'extrémité libre de chacune des électrodes 66 prolongeant les modules chauffants 4. Le terminal 64 présente une partie de fixation 68 formant un manchon de largeur légèrement supérieure à la largeur de l'électrode 66 (visible sur la figure 6) pour venir être serti sur l'électrode associée 66, et il présente une partie de raccordement formée par une languette 70 qui s'étend dans le prolongement de l'électrode 66. Cette languette 70 présente ici une section sensiblement rectangulaire, de forme complémentaire de celle des fentes d'insertion 60 réalisées dans la première interface 8.

Dans le mode de réalisation illustré, les terminaux de raccordement 64 sont portés par les électrodes 66 et les fentes 60 réalisées dans la première interface 8 débouchent de chaque côté de la première platine 46 pour que les terminaux 64 puissent traverser la première interface de connexion 8 et être en prise avec les moyens de raccordement électriques reliés au réseau électrique du véhicule. On comprend que d'autres solutions de raccordement électriques pourraient être choisies sans sortir du contexte de l'invention et de la réalisation monobloc du boîtier, et l'on pourrait à titre d'exemple mettre en place les enseignements de la demande de brevet FR2895204.

La deuxième interface 12 comporte une deuxième platine 72 qui s'étend transversalement aux parois longitudinales 20, 22, 24 du compartiment de chauffe 6, et sensiblement parallèlement à la première platine 46 de la première interface de connexion 8. La deuxième interface 12 comporte en outre une patte de guidage 74 disposée à une extrémité verticale de la deuxième platine 72.

La deuxième platine 72 présente une partie pleine 76 à l'extrémité opposée à la patte de guidage 74, pour le support de la barrette 16, et elle présente une partie centrale munie d'une ouverture 78 donnant accès aux deux logements 26 et 28 à l'intérieur du compartiment de chauffe 6. Il importe que l'ouverture réalisée dans la deuxième platine 72 présente une hauteur, dans la direction verticale, et une largeur, dans la direction transversale, au moins égales à la hauteur et la largeur correspondantes des logements 26, 28, pour permettre l'insertion des modules chauffants 4 dans le compartiment de chauffe 6 par cette ouverture 78, opposée à la première interface de connexion 8.

La patte de guidage 74 porte des moyens de guidage complémentaires d'un second moyen de guidage solidaire du conduit. Ces moyens de guidage sont disposés en saillie du compartiment de chauffe 6, en dégagement latéral. Le second moyen de guidage solidaire du conduit est un élément mâle ou femelle de forme complémentaire d'un élément femelle ou mâle formant les moyens de guidage portés par la patte de guidage 74 de la deuxième interface 12. Dans l'exemple illustré, les moyens de guidage portés par la deuxième interface 12 consistent en une pince 80 de diamètre interne sensiblement égal au diamètre externe d'un rail de guidage (non visible sur les figures) solidaire du conduit et s'étendant le long de l'emplacement que doit prendre le dispositif de chauffage additionnel 2 dans le conduit.

On va maintenant décrire le montage du dispositif de chauffage additionnel 2 comprenant le boîtier 3 monobloc selon l'invention. Dans le mode de réalisation illustré, où les terminaux de raccordement 64 sont rendus solidaires des électrodes 66 des modules chauffants 30, 32, on réalise dans un premier temps le sertissage des terminaux 64 sur les électrodes 66. On insère ensuite les modules chauffants 30, 32 dans les logements appropriés 26 et 28 à l'intérieur du compartiment de chauffe 6. Pour cela, on insère selon l'invention les modules chauffants 30, 32 par l'ouverture 78 formée dans la deuxième interface de connexion 12, les terminaux de raccordement 64 en premier, et on fait glisser les modules chauffants 30, 32 en translation vers la première interface de connexion 8. Au passage, les parois des modules chauffants 30, 32 repoussent les doigts d'encliquetage 40 vers l'extérieur du logement que ces modules chauffants 30, 32 viennent occuper. L'insertion du deuxième module chauffant 32, comportant trois dissipateurs thermiques 29, dans le deuxième logement 28 génère le déplacement de la lame élastique 36 dans le plan de la paroi intermédiaire 24, et le bossage 38 de l'extrémité libre de la lame 36 pousse le premier module chauffant 30 de deux dissipateurs thermiques 29 dans le premier logement 26 contre la paroi latérale dite supérieure 20. En fin d'insertion, la languette 70 de chaque terminal 64 pénètre dans la fente 60 qui lui est associée de manière à ressortir de l'autre côté de la première interface de connexion 8, à l'intérieur du fourreau 48. Dans cette position, la paroi d'extrémité distale des modules chauffants 4, c'est-à-dire celle tournée vers la deuxième interface de connexion 12, est bloquée par les doigts d'encliquetage 40 qui ont repris leur position d'origine par rappel élastique lorsque les parois des modules chauffants 30, 32 ne les contraignaient plus verticalement.

Le dispositif de chauffage 2 est ensuite inséré dans un conduit de l'installation de chauffage-ventilation et/ou climatisation, par insertion initiale de la deuxième interface de connexion 12 dans une ouverture réalisée dans ce conduit. On fait coopérer les moyens de guidage 80 portés par la deuxième interface de connexion 12 avec des moyens de guidage complémentaires portés par le conduit, pour amener la deuxième interface de connexion 12 et la première interface de connexion 8 respectivement contre des moyens de fixation portés par le conduit. La première interface de connexion 8 est solidarisée au conduit par vissage, tandis que la deuxième interface de connexion 12 est plaquée contre la paroi du conduit, bloquée en position par des ergots d'indexage disposés en saillie de cette paroi. On pourra prévoir que la deuxième interface de connexion 12 est avantageusement emboîtée à force dans ou autour d'un manchon complémentaire de la forme femelle de l'ouverture 78 de la deuxième interface de connexion 12. De la sorte, il est notable que la deuxième interface de connexion 12 permet d'une part la tenue des modules chauffants 4 dans le compartiment de chauffe 2 et d'autre part la mise en position du dispositif de chauffage additionnel 2 dans le conduit de l'installation.

Les terminaux 64 sont ensuite raccordés au réseau électrique du véhicule. La gestion de commande du dispositif de chauffage additionnel 2 est, dans le cas illustré, localisée ailleurs sur le véhicule, par exemple dans un calculateur électronique d'habitacle. Toutefois, on pourrait envisager d'intégrer un module de commande dans et/ou sur la première interface de connexion 8.

La description qui précède explique clairement comment l'invention permet d'atteindre les objectifs qu'elle s'est fixés et notamment de proposer un ensemble de chauffage dans lequel un dispositif de chauffage de type électrique est disposé en travers d'un conduit d'une installation de ventilation, chauffage et/ou climatisation d'un véhicule automobile, pour permettre la diffusion de chaleur par excitation électrique de modules chauffants. Le fait que le boîtier du dispositif de chauffage soit monobloc permet de réaliser l'ensemble, c'est-à-dire le compartiment de chauffe et le ou les interfaces de connexion, dans un matériau plastique, chargé en fibres de verre pour assurer une rigidité suffisante et une légèreté recherchée dans le domaine automobile. Le fait de ne plus avoir besoin d'assembler les interfaces de connexion après la mise en place des modules chauffants dans le compartiment de chauffe est avantageux en ce que, outre la facilité de montage, il assure un positionnement correct intuitif des extrémités des modules chauffants par rapport aux moyens de raccordement électrique du réseau du véhicule. Ceci est rendu possible notamment par une conception nouvelle de moule et par une conception nouvelle de la deuxième interface de connexion, avec une ouverture débouchant sur les logements du compartiment de chauffe, qui permet l'insertion des modules chauffants par une extrémité opposée à la première interface de connexion au réseau électrique.

## Revendications

1. Boîtier pour un dispositif de chauffage électrique d'un flux d'air circulant à l'intérieur d'une installation de ventilation, chauffage et/ou climatisation d'un véhicule automobile, ledit boîtier comportant :
- au moins un compartiment de chauffe (6) définissant au moins un logement principal (26, 28) dans lequel peut être installé au moins un module chauffant (4, 30, 32) ;
- une première interface de connexion (8) arrangée pour la liaison du au moins un module chauffant (4, 30, 32) à une alimentation électrique du véhicule.
- une deuxième interface de connexion (12) arrangée pour coopérer avec des moyens de maintien en position qui sont portés par l'installation de ventilation, chauffage et/ou climatisation, le compartiment de chauffe (6) et les deux interfaces de connexion (8, 12) étant venus de matière de sorte que le boîtier est formé d'un seul et même bloc, **caractérisé en ce que** la deuxième interface de connexion (12) comporte une ouverture (78) pour l'insertion du au moins un module chauffant (4, 30, 32) dans le logement du compartiment de chauffe (6), par le côté opposé à la première interface de connexion (8).

2. Boîtier selon la revendication 1, **caractérisé en ce que** les interfaces de connexion (8, 12) sont disposés respectivement à des extrémités (10, 14) opposées du compartiment de chauffe (6).

3. Boîtier selon la revendication 1 ou 2, **caractérisé en ce qu'**au moins une partie d'au moins un côté du compartiment de chauffe (6) est évidée.

4. Boîtier selon l'une des revendications 1 à 3, **caractérisé en ce que** le compartiment de chauffe (6) comporte deux côtés latéraux parallèles (20, 22) qui s'étendent selon la direction d'extension générale du compartiment de chauffe (6) et deux côtés principaux parallèles s'étendant selon la direction d'extension générale du compartiment de chauffe (6).

5. Boîtier selon la revendication 4, **caractérisé en ce que** chacun des côtés principaux comporte au moins un montant transversal (18) reliant lesdits côtés latéraux (20, 22).

6. Boîtier selon l'une des revendications 4 à 5, **caractérisé en ce qu'**au moins un côté latéral (20, 22) du compartiment de chauffe (6) comporte au moins un doigt d'encliquetage (40) à déformation élastique permettant la retenue d'un module chauffant respectif (4, 30, 32).

7. Boîtier selon l'une des revendications précédentes, **caractérisé en ce qu'**il comporte au moins un moyen permettant de créer une perte de charge (16) du flux d'air circulant dans l'emplacement dans lequel ledit boîtier est installé.

8. Boîtier selon la revendication 7, **caractérisé en ce que** le au moins un moyen permettant de créer une perte de charge (16) est venue de matière avec le compartiment de chauffe (6).

9. Boîtier selon l'une des revendications précédentes, **caractérisé en ce que** le compartiment de chauffe (6) comprend au moins une paroi intermédiaire (24) s'étendant à l'intérieur du logement dans lequel peut être installé au moins un module chauffant (4, 30, 32).

10. Boîtier selon la revendication 9, **caractérisé en ce que** la au moins une paroi intermédiaire (24) subdivise le logement du compartiment de chauffe (6) en deux sous-parties (26, 28) permettant chacune de recevoir au moins un module chauffant (30, 32) ; une première sous-partie (26) est délimitée par une face interne d'un côté latéral (20) du compartiment de chauffe (6) et la paroi intermédiaire (24) et une deuxième sous-partie (28) est délimitée par une face interne du côté latéral opposé (22) et la paroi intermédiaire (24).

11. Boîtier selon l'une des revendications précédentes, **caractérisé en ce qu'**il est réalisé dans un matériau plastique chargé.

12. Dispositif de chauffage comportant un boîtier selon l'une des revendications 1 à 11, et au moins un module chauffant (4, 30, 32) logé dans le compartiment de chauffe (6) du boîtier.

13. Installation de ventilation, chauffage et/ou climatisation d'un véhicule automobile comportant un dispositif de chauffage selon la revendication 12.

## Patentansprüche

1. Gehäuse für eine elektrische Heizvorrichtung für einen im Innern einer Lüftungs-, Heizungs- und/oder Klimaanlage eines Kraftfahrzeugs zirkulierenden Luftstrom, wobei das Gehäuse beinhaltet:
- mindestens einen Heizraum (6), der mindestens eine Hauptaufnahme (26, 28) definiert, in der mindestens ein Heizmodul (4, 30, 32) installiert werden kann;
- eine erste Anschlussschnittstelle (8), die zum Verbinden des mindestens einen Heizmoduls (4, 30, 32) mit einer Stromversorgung des Fahrzeugs eingerichtet ist,
- eine zweite Anschlussschnittstelle (12), die dazu eingerichtet ist, mit Positionshalteeinrichtungen zusammenzuwirken, die von der Lüftungs-, Heizungs- und/oder Klimaanlage getragen werden, wobei der Heizraum (6) und die beiden Anschlussschnittstellen (8, 12) materialeinheitlich sind, so dass das Gehäuse aus einem einzigen Block gebildet ist, **dadurch gekennzeichnet, dass** die zweite Anschlussschnittstelle (12) eine Öffnung (78) zum Einführen des mindestens einen Heizmoduls (4, 30, 32) in die Aufnahme des Heizraums (6) von der zur ersten Anschlussschnittstelle (8) entgegengesetzten Seite beinhaltet.

2. Gehäuse nach Anspruch 1, **dadurch gekennzeichnet, dass** die Anschlussschnittstellen (8, 12) jeweils an entgegengesetzten Enden (10, 14) des Heizraums (6) angeordnet sind.

3. Gehäuse nach Anspruch 1 oder 2, **dadurch gekennzeichnet, dass** mindestens ein Bereich mindestens einer Seite des Heizraums (6) durchbrochen ist.

4. Gehäuse nach einem der Ansprüche 1 bis 3, **dadurch gekennzeichnet, dass** der Heizraum (6) zwei parallele seitliche Seiten (20, 22), die sich entlang der Haupterstreckungsrichtung des Heizraums (6) erstrecken, und zwei parallele Hauptseiten, die sich entlang der Haupterstreckungsrichtung des Heizraums (6) erstrecken, beinhaltet.

5. Gehäuse nach Anspruch 4, **dadurch gekennzeichnet, dass** jede der Hauptseiten mindestens eine Querstrebe (18) beinhaltet, welche die seitlichen Seiten (20, 22) verbindet.

6. Gehäuse nach einem der Ansprüche 4 bis 5, **dadurch gekennzeichnet, dass** mindestens eine seitliche Seite (20, 22) des Heizraums (6) mindestens einen elastisch verformbaren Rastfinger (40) beinhaltet, der das Zurückhalten eines jeweiligen Heizmoduls (4, 30, 32) ermöglicht.

7. Gehäuse nach einem der vorhergehenden Ansprüche, **dadurch gekennzeichnet, dass** es mindestens eine Einrichtung beinhaltet, die es ermöglicht, einen Druckverlust (16) des Luftstroms zu bewirken, der an dem Ort zirkuliert, an dem das Gehäuse installiert ist.

8. Gehäuse nach Anspruch 7, **dadurch gekennzeichnet, dass** die mindestens eine Einrichtung, die es ermöglicht, einen Druckverlust (16) zu bewirken, materialeinheitlich mit dem Heizraum (6) ausgeführt ist.

9. Gehäuse nach einem der vorhergehenden Ansprüche, **dadurch gekennzeichnet, dass** der Heizraum (6) mindestens eine Zwischenwand (24) umfasst, die sich im Innern der Aufnahme erstreckt, in der das mindestens eine Heizmodul (4, 30, 32) installiert werden kann.

10. Gehäuse nach Anspruch 9, **dadurch gekennzeichnet, dass** die mindestens eine Zwischenwand (24) die Aufnahme des Heizraums (6) in zwei Teilbereiche (26, 28) unterteilt, von denen jeder mindestens ein Heizmodul (30, 32) aufnehmen kann; ein erster Teilbereich (26) wird durch eine Innenfläche einer seitlichen Seite (20) des Heizraums (6) und die Zwischenwand (24) begrenzt, und ein zweiter Teilbereich (28) wird durch eine Innenfläche der entgegengesetzten seitlichen Seite (22) und die Zwischenwand (24) begrenzt.

11. Gehäuse nach einem der vorhergehenden Ansprüche, **dadurch gekennzeichnet, dass** es aus einem verstärkten Kunststoff ausgeführt ist.

12. Heizvorrichtung mit mindestens einem Gehäuse nach einem der Ansprüche 1 bis 11 und mindestens einem Heizmodul (4, 30, 32), das im Heizraum (6) des Gehäuses aufgenommen ist.

13. Lüftungs-, Heizungs- und/oder Klimaanlage für ein Kraftfahrzeug mit einer Heizvorrichtung nach Anspruch 12.

## Claims

1. Housing for an electric heating device for a stream of air flowing inside a ventilating, heating and/or air-conditioning system of a motor vehicle, said housing comprising:
- at least one heating compartment (6) which defines at least one main slot (26, 28) in which at least one heating module (4, 30, 32) is able to be installed;
- a first connection interface (8) arranged for the connection of at least one heating module (4, 30, 32) to an electric power supply of the vehicle;
- a second connection interface (12) arranged to cooperate with position-retaining means which are carried by the ventilating, heating and/or air-conditioning system, the heating compartment (6) and the two connection interfaces (8, 12) being made in one piece such that the housing is formed by one and the same block **characterized in that** the second connection interface (12) comprises an opening (78) for inserting at least one heating module (4, 30, 32) into the slot of the heating compartment (6), via the side opposite the first connection interface (8).

2. Housing according to Claim 1, **characterized in that** the connection interfaces (8, 12) are arranged respectively at opposite ends (10, 14) of the heating compartment (6) .

3. Housing according to Claim 1 or 2, **characterized in that** at least part of at least one side of the heating compartment (6) is hollowed-out.

4. Housing according to one of Claims 1 to 3, **characterized in that** the heating compartment (6) comprises two parallel lateral sides (20, 22) which extend in the general direction of extension of the heating compartment (6) and two parallel main sides which extend in the general direction of extension of the heating compartment (6).

5. Housing according to Claim 4, **characterized in that** each of the main sides comprises at least one cross brace (18) which connects said lateral sides (20, 22).

6. Housing according to either of Claims 4 and 5, **characterized in that** at least one lateral side (20, 22) of the heating compartment (6) comprises at least one elastically deformable click and ratchet finger (40) which allows a respective heating module (4, 30, 32) to be retained.

7. Housing according to one of the preceding claims, **characterized in that** it comprises at least one means allowing a pressure drop (16) to be created in the air stream flowing in the area in which said housing is installed.

8. Housing according to Claim 7, **characterized in that** the at least one means allowing a pressure drop (16) to be created is made in one piece with the heating compartment (6) .

9. Housing according to one of the preceding claims, **characterized in that** the heating compartment (6) includes at least one intermediate wall (24) which extends inside the slot in which at least one heating module (4, 30, 32) is able to be installed.

10. Housing according to Claim 9, **characterized in that** the at least one intermediate wall (24) subdivides the slot of the heating compartment (6) into two sub-parts (26, 28), allowing each to receive at least one heating module (30, 32); a first sub-part (26) is delimited by an internal face of a lateral side (20) of the heating compartment (6) and the intermediate wall (24) and a second sub-part (28) is delimited by an internal face of the opposite lateral side (22) and the intermediate wall (24) .

11. Housing according to one of the preceding claims, **characterized in that** it is realized in a filled plastic material.

12. Heating device comprising a housing according to one of Claims 1 to 11, and at least one heating module (4, 30, 32) which is accommodated in the heating compartment (6) of the housing.

13. Ventilating, heating and/or air-conditioning system for a motor vehicle comprising a heating device according to Claim 12.
